# EUROPÄISCHE PATENTSCHRIFT

(11) **EP 3 434 934 B1**
(45) Veröffentlichungstag und Bekanntmachung des Hinweises auf die Patenterteilung: **27.09.2023**
(21) Anmeldenummer: 18185385.4
(22) Anmeldetag: 25.07.2018
(51) Int. Cl.: F16H 25/24, F16H 25/20

(54) **SPINDELANTRIEBSEINRICHTUNG**
SPINDLE DRIVE DEVICE
DISPOSITIF D'ENTRAÎNEMENT DE BROCHE

(30) Priorität: 26.07.2017 DE 102017212823
(43) Veröffentlichungstag der Anmeldung: 30.01.2019
(73) Patentinhaber: Stabilus GmbH, 56070 Koblenz (DE)
(72) Erfinder: Oster, Peter, 56068 Koblenz (DE); Ritter, Andreas, 56206 Hilgert (DE)
(74) Vertreter: Weickmann & Weickmann PartmbB

(56) Entgegenhaltungen:
- EP-A2- 2 975 297
- US-A1- 2004 093 969

## Beschreibung

Die Erfindung betrifft eine Spindelantriebseinrichtung, wie sie beispielsweise zum Öffnen und Schließen von Türen und/oder Heckklappen von Kraftfahrzeugen eingesetzt wird.

Die im Markt allgemein bekannten Spindelantriebseinrichtungen sind üblicherweise derart aufgebaut, dass eine Spindel mit einem Längsende der Spindelantriebseinrichtung verbunden ist und eine mit der Spindel in Gewindeeingriff stehende Spindelmutter mit dem anderen Längsende der Spindelantriebseinrichtung verbunden ist. Die beiden Längsenden sind jeweils mit einer übergeordneten, d.h. nicht zu der Spindelantriebseinrichtung gehörenden, Baugruppe verbunden. Auf eine Rotation der Spindel hin wird der Abstand zwischen den beiden Längsenden, je nach Rotationsrichtung, vergrößert oder verkleinert. Die Spindel wird dabei von einer Antriebseinheit angetrieben, welche in einem an der Spindel angebrachten Antriebsbaugruppengehäuse aufgenommen ist. Das Antriebsbaugruppengehäuse ist dabei derart angeordnet, dass es bei einer Verlängerung bzw. Verkürzung der Spindelantriebseinrichtung, und einem damit verbundenen voneinander weg bzw. aufeinander zu Verlagern der übergeordneten Baugruppen, zumindest einen Teil der auftretenden Zug- oder/und Druckkräfte aufnimmt, welche von der einen übergeordneten Baugruppe durch die Spindelantriebseinrichtung auf die andere übergeordnete Baugruppe einwirken. Folglich muss das Antriebsbaugruppengehäuse entsprechend stabil ausgebildet sein und in den Kraftfluss durch die Spindelantriebseinrichtung eingebunden sein. Hierdurch ist der Herstellungs- und Kostenaufwand bei der Produktion dieser Spindelantriebseinrichtungen gesteigert.

Aus der EP 2 975 297 A2 ist eine Spindelantriebseinrichtung mit einer Spindel und einer Spindelmutter bekannt, welche über eine Antriebsbaugruppe mit einer Antriebseinheit zueinander verlagerbar sind, wobei ein Kopplungselement die Spindel mit einer entsprechenden Verbindungseinheit verbindet.

Es ist daher Aufgabe der vorliegenden Erfindung, hier Abhilfe zu schaffen.

Diese Aufgabe wird erfindungsgemäß durch eine Spindelantriebseinrichtung nach Anspruch 1 gelöst.

Bereits an dieser Stelle sei erwähnt, dass sich das erfindungsgemäße Merkmal, dass "das Antriebsbaugruppengehäuse frei von Kräften ist, welche von einer der übergeordneten Baugruppen durch die Spindelantriebseinrichtung auf die andere der übergeordneten Baugruppen übertragen werden", auf eben diejenigen Kräfte bezieht, welche als Axialkräfte infolge des Eigengewichts einer der übergeordneten Baugruppen, wie beispielsweise einer Heckklappe eines Fahrzeugs, oder infolge eines manuellen Eingriffs eines Benutzers, welcher beispielsweise die Heckklappe des Fahrzeugs betätigt, in der Spindelantriebseinrichtung, und bei aus dem Stand der Technik bekannten Spindelantriebseinrichtungen auch im Antriebsbaugruppengehäuse, auftreten. Kräfte, welche durch die Antriebseinheit zum Antrieb der Spindelantriebseinrichtung entstehen, können auch bei der erfindungsgemäßen Spindelantriebseinrichtung von dem Antriebsbaugruppengehäuse aufgenommen werden.

Das Antriebsbaugruppengehäuse der erfindungsgemäßen Spindelantriebseinrichtung kann folglich, im Vergleich zu Antriebsbaugruppengehäusen gemäß dem Stand der Technik, dünner ausgebildet sein. Natürlich hat das Antriebsbaugruppengehäuse der erfindungsgemäßen Spindelantriebseinrichtung ebenfalls eine Schutzfunktion der in dem Antriebsbaugruppengehäuse aufgenommenen Komponenten gegenüber von außen einwirkenden Kräften zu erfüllen. Dies kann aber beispielsweise durch ein für diesen Zweck lediglich partiell, z.B. im Bereich der Antriebseinheit, verstärktes Antriebsbaugruppengehäuse erfüllt werden. Da das Antriebsbaugruppengehäuse gemäß der vorliegenden Erfindung nicht in den Kraftfluss zwischen den beiden Verbindungseinheiten eingebunden ist, kann auch eine Toleranz in Bezug auf die Fertigung des Antriebsbaugruppengehäuses und in Bezug auf dessen Anordnung an der Spindelantriebseinrichtung reduziert werden. Durch diese Maßnahmen können die Fertigungskosten der Spindelantriebseinrichtung effizient gesenkt werden.

Dadurch, dass, wie bereits zuvor erwähnt, das Antriebsbaugruppengehäuse gemäß der vorliegenden Erfindung nicht in den Kraftfluss zwischen den beiden Verbindungseinheiten eingebunden ist, kann es ermöglicht werden, dass das Antriebsbaugruppengehäuse im Betrieb geringeren Verformungen unterzogen wird als bei bekannten Spindelantriebseinrichtungen, wodurch eine höhere Lagerungsgenauigkeit der Antriebseinheit relativ zu einem jeweils anzutreibenden Element, wie beispielsweise der Spindel oder der Spindelmutter, erreicht werden kann. Durch die höhere Lagerungsgenauigkeit können Geräusche reduziert oder sogar vollständig verhindert werden, welche auf Grund von Lagerungsungenauigkeiten entstehen.

Das Kopplungselement kann als von dem Antriebsbaugruppengehäuse getrenntes Element ausgebildet sein.

Das Kopplungselement kann beispielsweise aus Metall, insbesondere aus Stahl oder einem Zink-Druckguss, hergestellt sein.

Das Kopplungselement kann ferner im Wesentlichen zylindrisch ausgebildet sein, es sind jedoch ebenfalls polygone Formen des Kopplungselements denkbar.

Die Antriebseinheit kann vorteilhafterweise durch einen Elektromotor gebildet sein. Es sind aber ebenso hydraulische oder pneumatische Antriebseinheiten denkbar.

Es sei an dieser Stelle erwähnt, dass die Spindelantriebseinrichtung ferner ein Federelement, wie beispielsweise eine Druckfeder oder eine Zugfeder, umfassen kann, welches dazu eingerichtet ist, bei einer Relativverlagerung der beiden Längsenden der Spindelantriebseinrichtung in einer Richtung Energie zu speichern, welche bei einer Relativverlagerung der beiden Längsenden der Spindelantriebseinrichtung in der entgegengesetzten Richtung wieder freigegeben wird, so dass die von der Antriebseinheit aufzubringende Leistung zur Verlagerung der beiden Längsenden der Spindelantriebseinrichtung in dieser Richtung reduziert werden kann. Insbesondere kann das Federelement die Spindelantriebseinrichtung beim Anheben einer übergeordneten Baugruppe, d.h. bei einem Wirken entgegen der Schwerkraft, unterstützen. Folglich soll das Merkmal, dass Kräfte von einer der übergeordneten Baugruppen durch die Spindelantriebseinrichtung auf die andere der übergeordneten Baugruppen übertragen werden, im Rahmen der vorliegenden Erfindung derart verstanden werden, dass es ebenso die Kräfte umfasst, welche auf Grund der in dem Federelement gespeicherten Energie auf die Spindelantriebseinrichtung einwirken.

Um die Laufeigenschaften der Spindelantriebseinrichtung, insbesondere bei einer Spindelantriebseinrichtung, bei welcher die Spindel angetrieben wird, zu verbessern, kann die Spindelantriebseinrichtung wenigstens zwei die Spindel oder die Spindelmutter relativ zu der ersten oder zweiten Verbindungseinheit lagernde Lager umfassen, wobei ein Lager dabei als Festlager und ein anderes Lager als Loslager ausgebildet sein kann.

Vorteilhafterweise kann das Kopplungselement die erste Verbindungseinheit oder die zweite Verbindungseinheit mit dem wenigstens einen Lager verbinden, wobei das Lager axial unverlagerbar mit der Spindel oder der Spindelmutter verbunden sein kann.

Das Kopplungselement kann so Zug- oder/und Druckkräfte aufnehmen, welche durch Schub oder Zug der Spindel bzw. der Spindelmutter relativ zu dem Lager auf das Lager einwirken, und diese an die erste Verbindungseinheit oder die zweite Verbindungseinheit, und über diese an die entsprechende übergeordnete Baugruppe, übertragen. Hierfür kann das Kopplungselement mit dem Lager an dessen Außenumfang verbunden sein. In dem Fall, dass das Lager ein Kugellager ist, kann der innere Lagerring mit der Spindel bzw. der Spindelmutter verbunden sein und der äußere Lagerring mit dem Kopplungselement verbunden sein. Das Kopplungselement kann dabei eine axiale Sicherung des Lagers relativ zu der jeweiligen Verbindungseinheit darstellen, z.B. im Sinne einer Klammer oder eines Käfigs. Die Verbindungseinheit kann einen Bund oder eine Basis aufweisen, mit welchem das Kopplungselement eingreifen kann.

In einer Weiterbildung der Erfindung, kann das Kopplungselement wenigstens einen nach innen vorstehenden Vorsprung aufweisen, welcher dazu eingerichtet ist, in dem Kopplungselement aufgenommene Komponenten axial zu sichern. Der Vorsprung kann beispielsweise unter Verwendung eines Umformverfahrens hergestellt sein. Insbesondere kann der wenigstens eine nach innen vorstehende Vorsprung als nach radial innen vorstehender Ring an einem der Längsenden des Kopplungselements ausgebildet sein, so dass zur Ausbildung des Vorsprungs keine zusätzlichen Elemente verwendet werden müssen.

Das Kopplungselement kann vorteilhafterweise wenigstens einen Sprengring umfassen, welcher dazu eingerichtet ist, in dem Kopplungselement aufgenommene Komponenten axial zu sichern. Insbesondere kann das Kopplungselement sowohl einen nach innen vorstehenden Vorsprung als auch einen Springring aufweisen, so dass Komponenten der Spindelantriebseinrichtung in das Kopplungselement, beispielsweise bis sie mit dem Vorsprung des Kopplungselements in Kontakt treten, eingeführt werden können und anschließend durch den Springring in einer der Einführrichtung der Komponenten in das Kopplungselement entgegengesetzten Richtung axial gesichert werden können. Der Sprengring kann dabei in eine Nut eingreifen, welche an einer Innenseite des Kopplungselements, beispielsweise an dieser Innenseite vollständig umlaufend, angeordnet ist.

Alternativ kann der Sprengring auch durch ein Umformen des Kopplungselements nach dem Einsetzen der Komponenten in das Kopplungselement ersetzt werden.

Bei der erfindungsgemäßen Spindelantriebseinrichtung kann die Abtriebswelle der Antriebseinheit zur Spindel im Wesentlichen orthogonal verlaufen. Bauraumgegebenheiten, bei denen diese Ausführungsvariante mit Vorteil eingesetzt werden kann, findet man beispielsweise bei Heckklappen von Kraftfahrzeugen. Dort kann die Antriebseinheit vorteilhafterweise im Wesentlichen parallel zur Schwenkachse der Heckklappe angeordnet werden. Natürlich ist es im Rahmen der vorliegenden Erfindung ebenfalls denkbar, die Abtriebswelle der Antriebseinheit parallel zur Spindel der Antriebseinrichtung anzuordnen.

Um gewährleisten zu können, dass die erfindungsgemäße Spindelantriebseinrichtung zwischen zwei übergeordnete Baugruppen, wie beispielsweise einer Heckklappe und einer Karosserie eines Fahrzeugs, eingebaut werden kann, um durch Längenänderung der Spindelantriebseinrichtung eine Verschwenkung dieser beiden Baugruppen um eine Schwenkachse hervorrufen zu können, kann die erste Verbindungseinheit relativ zu der Spindel oder/und die zweite Verbindungseinheit relativ zu der Spindelmutter drehbar gehaltert sein. Je nachdem, ob die Spindel oder die Spindelmutter in der erfindungsgemäßen Spindelantriebseinrichtung durch die Antriebseinheit in Rotation versetzt wird, kann die entsprechend nicht angetriebene Komponente fest mit der zugehörigen Verbindungseinheit verbunden werden. Natürlich ist es ebenfalls denkbar, sowohl die erste als auch die zweite Verbindungseinheit drehbar an der Spindelantriebseinrichtung anzuordnen.

Das Antriebsbaugruppengehäuse kann aus mehreren, insbesondere zwei, Gehäuseteilen aufgebaut sein, welche miteinander derart verbindbar sind, dass das Antriebsbaugruppengehäuse die Antriebsbaugruppe, das Kopplungselement und wenigstens einen Abschnitt der Spindel umgibt. Das Antriebsbaugruppengehäuse kann somit insbesondere an dem Abschnitt, an welchem es das Kopplungselement umgibt, in einer zu der Spindel parallelen Richtung auf ein entsprechendes Längsende der Spindelantriebseinrichtung aufgesteckt werden und anschließend zur Sicherung des Antriebsbaugruppengehäuses an der Spindelantriebseinrichtung mit einem weiteren Gehäuseteil z.B. verschraubt werden. Da das Antriebsbaugruppengehäuse gemäß der vorliegenden Erfindung keine durch die Funktion der Spindelantriebseinrichtung bedingten Kräfte aufnehmen muss, mit Ausnahme der eingangs erwähnten, sondern lediglich die in dem Antriebsbaugruppengehäuse aufgenommenen Komponenten vor Verschmutzung oder/und Beschädigung zu schützen hat, kann es insbesondere in dem die Spindel und das Kopplungselement umgebenden Abschnitt sehr frei gestaltet sein. So können die Gehäuseteile des Antriebsbaugruppengehäuses auch beispielsweise ineinander eingesteckt oder miteinander verklebt sein, ohne dass ein besonderer Kraftschluss der Gehäuseteile des Antriebsbaugruppengehäuses beachtet werden muss.

Insbesondere kann die Spindel ein Stützelement umfassen, welches mit der Spindel verbunden, insbesondere vernietet, ist, und welches das Lager relativ zu der Spindel axial sichert. Dies kann eine besonders einfache und kosteneffiziente axiale Sicherung des Lagers, und über das Lager auch des Kopplungselements, relativ zu der Spindel darstellen. Insbesondere kann die Spindel in Form einer Kappe umgeformt werden, um das Stützelement, welches zum Beispiel in Form einer Scheibe ausgebildet ist, an der Spindel zu sichern. Das in dem Kopplungselement aufgenommene Lager kann folglich radial innen mit dem Stützelement und radial außen mit dem Kopplungselement in Verbindung stehen. Auf diese Weise kann eine zwischen der Spindel und der dem Kopplungselement benachbarten Verbindungseinheit wirkende Zugkraft von der Spindel über das Stützelement auf das Lager, von dort auf das Kopplungselement und von dort weiter auf die Verbindungseinheit übertragen werden. Im Fall des bereits zuvor erwähnten Kugellagers kann das Stützelement mit einem radial inneren Ring des Kugellagers in Verbindung stehen, wohingegen ein radial äußerer Ring des Kugellagers mit dem Kopplungselement in Verbindung steht.

Die Spindelantriebseinrichtung kann ein mit der Spindel verbundenes Antriebsrad umfassen, auf welches die Antriebseinheit derart einwirkt, dass eine Rotation des Antriebsrads die Spindel oder die Spindelmutter in Rotation versetzt. Das Antriebsrad kann dabei mit der Spindel in einer ein Drehmoment übertragenden Verbindung stehen, wie beispielsweise einem Formschluss über eine Keilwelle oder ähnlichem.

Insbesondere kann das Antriebsrad ein Schneckenrad sein, welches mit einer mit der Abtriebswelle verbundenen Schneckenwelle in Gewindeeingriff steht. Die hierdurch gebildete Schneckenradstufe zur Untersetzung der Drehzahl der Abtriebswelle der Antriebseinheit zeichnet sich durch geringe Geräuschentwicklung aus.

Die Spindelantriebseinrichtung kann ein Zwischenelement umfassen, welches einerseits mit der Spindel oder der Spindelmutter und andererseits mit dem Antriebsrad verbunden ist und welches dazu eingerichtet ist, ein Drehmoment des Antriebsrads auf die Spindel oder die Spindelmutter zu übertragen. Zwischen Zwischenelement und Antriebsrad kann lediglich ein Reibschluss oder ein vorgespannter Formschluss vorgesehen sein, so dass an dieser Stelle eine Überlastkupplung ausgebildet sein kann, d.h. dass beispielsweise bei Blockierung der Spindel oder der Spindelmutter und fortlaufendem Antriebsrad ein Schlupf zwischen Zwischenelement und Antriebsrad stattfinden kann. Hierdurch kann die Spindelantriebseinrichtung, und insbesondere die Antriebseinheit, vor Beschädigung durch Überlastung geschützt werden.

Das Zwischenelement kann ferner dazu eingerichtet sein, an seinem Außenumfang wenigstens ein Lager aufzunehmen. So kann das Zwischenelement als Adapter zwischen einer für die vorbestimmte Funktion der Spindelantriebseinrichtung optimierten Spindel oder Spindelmutter und Lagern in standardisierten Größen dienen. Die Verwendung von Standardlagern kann sich zusätzlich positiv auf die Herstellungskosten der erfindungsgemäßen Spindelantriebseinrichtung auswirken.

Das Zwischenelement kann wenigstens einen sich nach radial außen erstreckenden Vorsprung aufweisen, welcher dazu eingerichtet ist, ein Lager oder/und das Antriebsrad axial zu sichern. Beispielsweise kann ein Lager so an seiner radial inneren Seite zwischen dem Vorsprung des Zwischenelements und einem Vorsprung der Spindel oder der Spindelmutter gesichert werden. Alternativ oder zusätzlich kann ein Lager, welches auf dem Zwischenelement aufgenommen ist, an seiner radial inneren Seite einerseits durch den Vorsprung des Zwischenelements und andererseits durch das oben erwähnte Stützelement oder durch einen Rand der Spindel selbst gesichert werden. Unter Ausbildung des Zwischenelements mit entsprechenden Vorsprüngen kann eine Sicherung des Lagers/der Lager auf einfache Weise realisiert werden.

Abschließend sei zu erwähnen, dass vorteilhafterweise die Spindel aus Metall, insbesondere aus Stahl, die Spindelmutter aus Kunststoff, insbesondere aus POM, das Antriebsbaugruppengehäuse aus Kunststoff, insbesondere aus PBT/PBTGF, das Stützelement aus Metall, insbesondere aus Stahl, das Antriebsrad aus Kunststoff, insbesondere aus POM, das Kopplungselement aus Metall, insbesondere aus Stahl, und die Verbindungseinheiten aus Kunststoff, insbesondere aus POM, hergestellt sein können.

Die Erfindung wird im Folgenden anhand der begleitenden Zeichnungen in größerem Detail erläutert werden.

Es stellt dar:
- Figur 1a: eine Seitenquerschnittsansicht eines Details der erfindungsgemäßen Spindelantriebseinrichtung in einer ersten Ausführungsform;
- Figur 1b: die Seitenquerschnittsansicht aus Figur 1a, wobei der Kraftfluss von durch die Spindelantriebseinrichtung übertragenen Zug- und Druckkräften dargestellt ist;
- Figur 2: eine Seitenquerschnittsansicht der Spindelantriebseinrichtung;
- Figur 3: eine Seitenquerschnittsansicht eines Details der erfindungsgemäßen Spindelantriebseinrichtung in einer zweiten Ausführungsform;
- Figur 4: eine Seitenquerschnittsansicht einer Antriebseinheit einer erfindungsgemäßen Spindelantriebseinrichtung;
- Figur 5: eine Seitenansicht der Spindelantriebseinrichtung;
- Figur 6: eine Aufsicht in einer Richtung axial zu der Spindel, wobei die Schnittebenen I-I und IV-IV der Schnittdarstellungen zu erkennen sind.

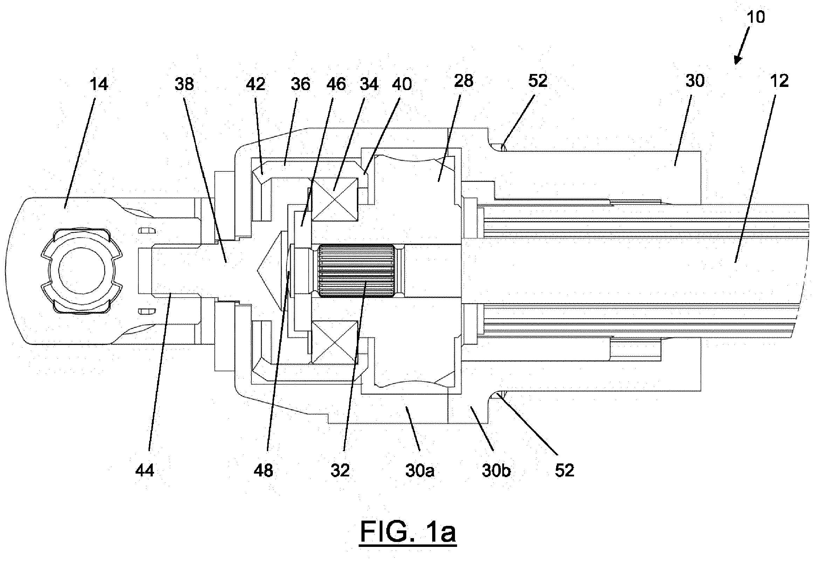

In Figur 1a ist eine erfindungsgemäße Spindelantriebseinrichtung allgemein mit 10 bezeichnet.

Wie in den Figuren 1a bis 2 zu erkennen ist, umfasst die Spindelantriebseinrichtung 10 eine mit einem Außengewinde versehene Spindel 12, welche mit einer ersten Verbindungseinheit 14 zur Verbindung der Spindelantriebseinrichtung 10 mit einer übergeordneten, d.h. nicht zu der Spindelantriebseinrichtung 10 gehörenden, Baugruppe, wie beispielsweise einer Heckklappe eines Fahrzeugs, verbunden ist, und eine mit dem Außengewinde der Spindel 12 in Gewindeeingriff stehende Spindelmutter 16, welche mit einer zweiten Verbindungseinheit 18 zur Verbindung der Spindelantriebseinrichtung 10 mit einer übergeordneten, d.h. nicht zu der Spindelantriebseinrichtung gehörenden, Baugruppe, wie beispielsweise einer Karosserie eines Fahrzeugs, verbunden ist.

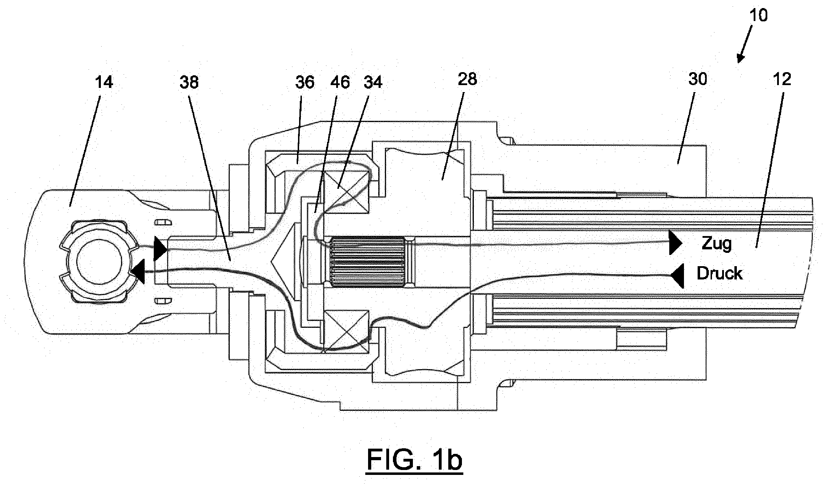

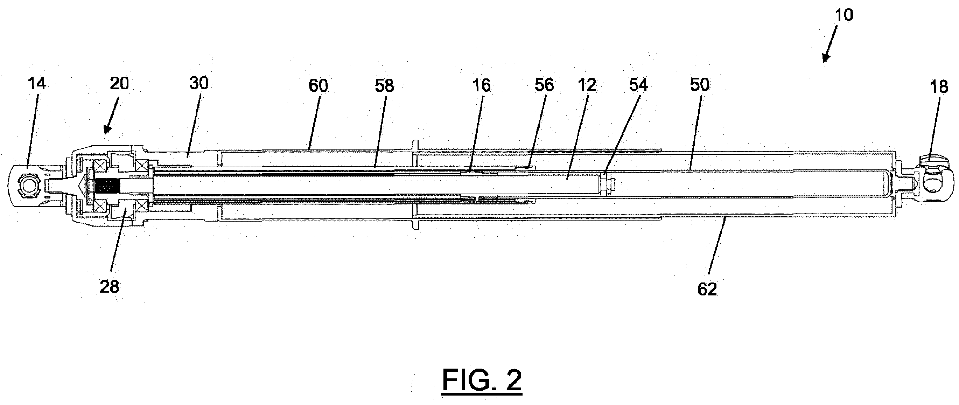

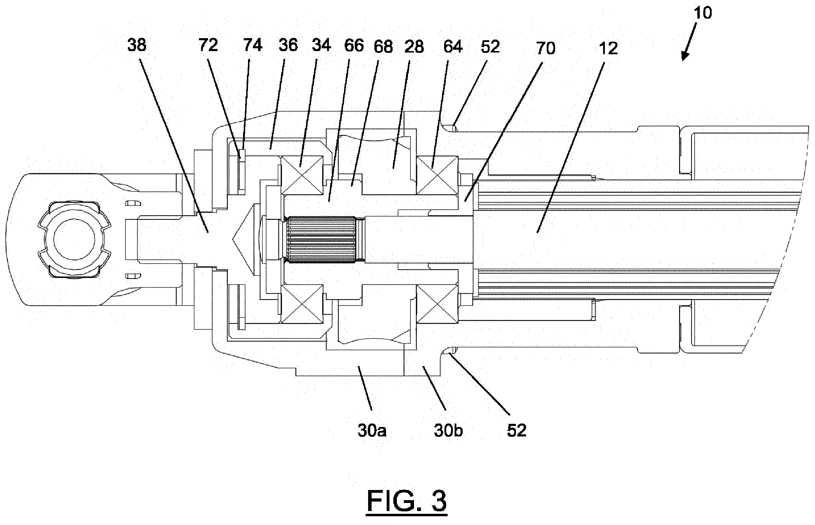

Es sei bereits an dieser Stelle erwähnt, dass die Figuren 2 und 3 eine andere bzw. zweite Ausführungsform der erfindungsgemäßen Spindelantriebseinrichtung 10 zeigen als die Figuren 1a und 1b. Dabei unterscheiden sich die beiden Ausführungsformen jedoch lediglich in Bezug auf die Details gemäß Figuren 1a, 1b und 3, welche weiter unten im Detail beschrieben werden.

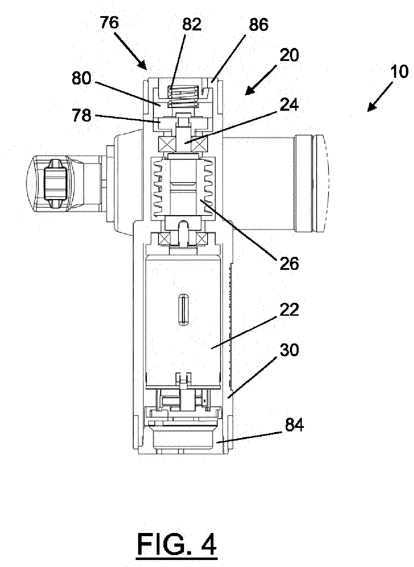

Die Spindelantriebseinrichtung 10 umfasst ferner eine Antriebsbaugruppe 20, welche zum Teil gemäß der in Figur 2 dargestellten Seitenquerschnittsansicht und zum Teil gemäß der in Figur 4 dargestellten Schnittansicht zu erkennen ist. Die Antriebsbaugruppe 20 umfasst eine Antriebseinheit 22, welche hier aus einem Elektromotor gebildet ist und dazu eingerichtet ist, die Spindel 12 anzutreiben.

Hierzu trägt eine Abtriebswelle 24 der Antriebseinheit 22 eine Schneckenwelle 26, welche wiederum mit einem als Schneckenrad ausgebildeten Antriebsrad 28 kämmt.

Das Antriebsrad 28 ist über eine Keilwelle 32 mit der Spindel 12 drehfest verbunden.

Die Antriebsbaugruppe 20 ist in einem Antriebsbaugruppengehäuse 30 aufgenommen, welches hier aus Kunststoff gefertigt ist.

Das Antriebsrad 28 und die Spindel 12 sind über ein Lager 34 relativ zu einem zylindrischen Kopplungselement 36 und relativ zu dem Antriebsbaugruppengehäuse 30 gelagert.

Das Kopplungselement 36 verbindet die erste Verbindungseinheit 14 mit der Spindel 12 derart, dass eine Verlagerung dieser beiden Elemente voneinander weg in einer axialen Richtung der Spindel 12 verhindert wird. In dem in Figur 1a dargestellten Ausführungsbeispiel ist das Lager 34 als Kugellager ausgebildet, wobei das Kopplungselement 36 mit einem äußeren Lagerring des Lagers 34 eingreift und diesen klammerartig mit einem Bund bzw. einer Basis 38, auf welchen/welche die erste Verbindungseinheit 14 über ein Gewinde 44 aufgeschraubt ist, verbindet. Das Kopplungselement 36 weist zu diesem Zweck an seinen beiden Längsenden nach radial innen umgeformte Ränder 40 und 42 auf. Die Basis 38 und das Lager 34 sind somit durch das Kopplungselement 36 aneinander befestigt. Die Basis 38 kann aus Metall, insbesondere aus Stahl hergestellt sein.

Ein radial innerer Lagerring des Lagers 34 ist über ein Stützelement 46, welches hier als Metallscheibe ausgebildet ist, an die Spindel 12 gesichert. Hierzu ist das in Figur 1a links dargestellte Ende der Spindel 12 in Form einer Kappe umgeformt, welche das Stützelement 46 und somit das Lager 34 und das Antriebsrad 28 relativ zu der Spindel 12 axial sichert.

Wie in Figur 1b zu erkennen ist, verläuft eine Zugkraft, welche zwischen den beiden übergeordneten und mit der Spindelantriebseinrichtung 10 verbundenen Baugruppen wirkt und somit über die beiden Verbindungseinheiten 14 und 18 auf die Spindelantriebseinrichtung 10 einwirkt, aus der ersten Verbindungseinheit 14 über die Basis 38, das Kopplungselement 36, das Lager 34 und das Stützelement 46 in die Spindel 12.

Eine zwischen den beiden übergeordneten Baugruppen entsprechend entgegengesetzte Druckkraft verläuft aus der Spindel 12 über das Antriebsrad 28, das Lager 34 und die Basis 38 in die erste Verbindungseinheit 14.

Wie in Figur 2 zu sehen, verlaufen diese Kräfte an der rechten Seite der Spindelantriebseinrichtung 10 von der Spindel 12 über die Spindelmutter 16 und ein damit verbundenes Stahlrohr 50 in die zweite Verbindungseinheit 18, welche mit dem Stahlrohr 50 verbunden ist.

Auf Grund des voranstehend erwähnten Kraftverlaufs ist das Antriebsbaugruppengehäuse 30 frei von Kräften, welche von einer der übergeordneten Baugruppen durch die Spindelantriebseinrichtung 10 auf die andere der übergeordneten Baugruppen übertragen werden.

Das Antriebsbaugruppengehäuse 30 kann daher aus einem leichten Material, wie Kunststoff, hergestellt und frei geformt sein, ohne auf eventuelle Kerbwirkungen der Gehäuseform achten zu müssen.

Das Antriebsbaugruppengehäuse 30 umfasst in den hier dargestellten Ausführungsformen einen Gehäuseteil 30a und einen Gehäuseteil 30b. Die beiden Gehäuseteile 30a und 30b werden über Schrauben 52 aneinander befestigt.

Alternativ oder zusätzlich zu den Schrauben 52 können die beiden Gehäuseteile 30a und 30b auch unter Verwendung eines Fügeverfahrens, wie beispielsweise Laserschweißen oder Kleben, miteinander verbunden werden.

In der geschnittenen Seitenansicht von Figur 2 ist zu sehen, wie die Spindelmutter 16 mit der Spindel 12 in Gewindeeingriff steht.

Auf eine Rotation der Spindel 12 hin wird die Spindelmutter 16 entsprechend der Rotationsrichtung und der Art des Gewindes der Spindel 12 in Figur 2 nach links oder rechts verlagert, so dass über das Stahlrohr 50 die zweite Verbindungseinheit 18 auf die erste Verbindungseinheit 14 zu oder von dieser weg verlagert wird.

Das in Figur 2 rechte Ende der Spindel 12 ist über einen Führungsring 54, welcher beispielsweise aus Kunststoff, insbesondere aus POM, hergestellt sein kann, in dem Stahlrohr 50 gelagert.

Das Stahlrohr 50 ist über eine Führungsbuchse 56, welche beispielsweise aus Kunststoff, insbesondere aus POM, hergestellt sein kann, in einem Führungsrohr 58 gelagert und aufgenommen. Das Führungsrohr 58, welches konzentrisch zu der Spindel 12 und diese zumindest teilweise umgebend angeordnet ist, kann aus Metall, insbesondere aus Aluminium, hergestellt sein. Das Führungsrohr 58 ist mit dem Antriebsbaugruppengehäuse 30 oder einem ersten Hüllrohr 60 verbunden. Die Spindelmutter 16 steht mit dem Inneren des Führungsrohrs 58 beispielsweise über Längsnuten in Eingriff, so dass eine Drehmomentabstützung der Spindelmutter 16 durch das Führungsrohr 58 bereitgestellt ist. Die Spindelmutter 16 kann sich nur in einer zu der Spindel 12 axialen Richtung im Führungsrohr 58 bewegen.

Ferner ist in Figur 2 zu erkennen, dass die erste Verbindungseinheit 14 mit dem ersten Hüllrohr 60 verbunden ist und die zweite Verbindungseinheit 18 mit einem zweiten Hüllrohr 62 verbunden ist, wobei das zweite Hüllrohr 62 in einer teleskopierbaren Weise in das erste Hüllrohr 60 eintauchen kann.

Die beiden Hüllrohre 60 und 62 können beispielsweise aus Kunststoff, insbesondere aus POM, hergestellt sein.

Die in Figur 3 dargestellte Ausführungsform der Spindelantriebseinrichtung 10 unterscheidet sich von der voranstehend beschriebenen, auf welche hiermit ausdrücklich verwiesen sei, lediglich durch die folgenden Merkmale.

Zusätzlich zu dem Lager 34 ist bei der Ausführungsform der erfindungsgemäßen Spindelantriebseinrichtung gemäß Figur 3 ein weiteres Lager 64 vorgesehen, welches die Laufeigenschaften der Spindel verbessern kann. Um zum Beispiel temperaturbedingte Längenänderungen der entsprechenden Komponenten aufnehmen zu können, ist das Lager 34 als Festlager und das Lager 64 als Loslager ausgebildet.

Zwischen dem Antriebsrad 28 und der Spindel 12 ist außerdem ein Zwischenelement 66 vorgesehen, welches mit der Spindel 12 über die Keilwelle 32 in einem drehmomentübertragenden Formschluss steht. Das Zwischenelement 66 fungiert als eine Art Adapter zwischen der Spindel 12 und den Lagern 34 und 64, so dass dadurch der Außendurchmesser der Spindel 12 in dem Bereich, in welchem die beiden Lager 34 und 64 angeordnet sind, derart erweitert werden kann, dass Lager einer handelsüblichen Standardgröße verwendet werden können. Das Zwischenelement 66 steht hier mit dem Antriebsrad 28 ebenfalls in einem drehmomentübertragenden Formschluss.

Das Zwischenelement 66 weist einen Vorsprung 68 auf, welcher das Antriebsrad 28 und das Lager 64 einerseits und das Lager 34 andererseits axial sichert. Das Lager 34 ist analog zu der Ausführungsform gemäß Figur 1a auf seiner anderen Seite über das Stützelement 64 axial gesichert. Das Antriebsrad 28 ist auf seiner dem Vorsprung 68 abgewandten Seite über das Lager 64 und dieses über eine Lagerbuchse 70 axial an der Spindel, d.h. an einem Absatz davon, gesichert. Die Lagerbuchse 70 könnte alternativ auch durch einen entsprechenden Bund der Spindel 12 ersetzt werden, jedoch weist die Verwendung der Lagerbuchse 70 montagebedingte Vorteile auf.

Als weiteren Unterschied umfasst die Ausführungsform gemäß Figur 3 einen Sprengring 72, welcher mit einer Nut 74 des Kopplungselements 36 eingreift. Der Sprengring 72 erfüllt dabei die gleiche Funktion der axialen Sicherung der Basis 38 und des Lagers 34 wie der umgeformte Rand 42 des Kopplungselements 36, bietet jedoch den Vorteil, dass ein entsprechender Umformungsschritt des Kopplungselements 36 entfallen kann.

In der Schnittansicht gemäß Figur 4 ist eine Bremseinheit 76 dargestellt, welche eine Bremsscheibe 78 mit einem daran angeordneten Bremsbelag 80 umfasst. Eine Druckfeder 82 übt auf den Bremsbelag 80 eine Druckkraft aus, so dass zwischen Bremsbelag 80 und Bremsscheibe 78 ein entsprechender Reibschluss gebildet ist. Die Bremseinheit 76 kann die Hysterese der Antriebseinheit 22 derart erhöhen, dass die Spindelantriebseinrichtung 10 auch in einem nicht vollständig eingefahrenen Zustand das Eigengewicht einer auf die Spindelantriebseinrichtung 10 wirkenden übergeordneten Baugruppe, wie beispielsweise einer Heckklappe eines Fahrzeugs, abstützen kann, so dass sich diese nicht ungewollt, d.h. nicht ohne kontrollierte Betätigung der Spindelantriebseinrichtung 10, bewegt.

Die Bremseinheit 76 kann dabei derart ausgebildet sein, dass sie nur in einer Richtung wirkt, d.h. beispielsweise ein Zusammendrücken der Spindelantriebseinrichtung 10 bremst, jedoch ein Auseinanderziehen der Spindelantriebseinrichtung 10 freigibt.

Selbstverständlich sind anstatt der erwähnten als Reibbremse ausgeführten Bremseinheit 76 auch andere Bremskonzepte denkbar, wie beispielsweise eine als Magnetbremse ausgeführte Bremseinheit 76.

Es ist ferner zu erkennen, dass die Abtriebswelle 24 der Antriebseinheit 22 orthogonal zu der Spindel 12 verläuft.

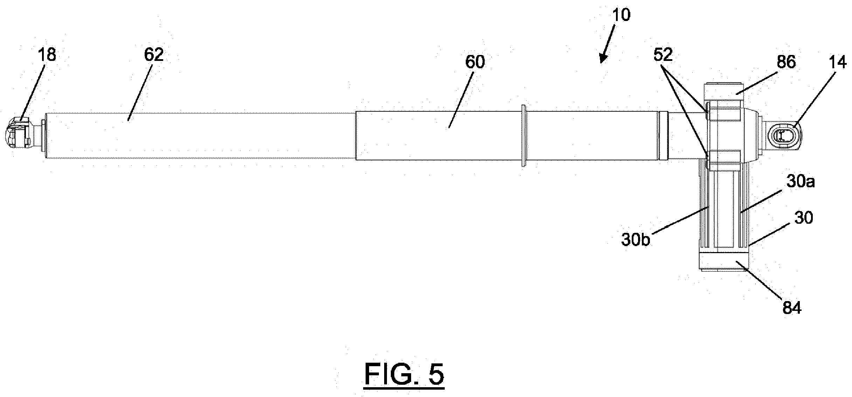

Der in Figur 4 dargestellte Teil des Antriebsbaugruppengehäuses 30 ist teilweise integral mit dem Gehäuseteil 30a des Antriebsbaugruppengehäuses 30 und teilweise integral mit dem Gehäuseteil 30b des Antriebsbaugruppengehäuses 30 ausgebildet (siehe hierzu Figur 5) und umfasst an seinem in Figur 4 oberen und unteren Ende jeweils eine Abschlusskappe 84 und 86, um in dem Antriebsbaugruppengehäuse 30 aufgenommene Komponenten, wie beispielsweise die Antriebseinheit 22, zu sichern.

In Figur 5 ist die Spindelantriebseinrichtung 10 in einer ungeschnittenen Seitenansicht dargestellt. Es ist zu erkennen, wie die zweite Verbindungseinheit 18 mit dem Hüllrohr 62 und die erste Verbindungseinheit 14 mit dem Hüllrohr 60 verbunden ist.

Insbesondere ist in Figur 5 zu erkennen, dass das Antriebsbaugruppengehäuse 30, insbesondere der Abschnitt, welcher die Antriebseinheit 22 aufnimmt, aus dem Gehäuseteil 30a und dem Gehäuseteil 30b zusammengesetzt ist. Die beiden Gehäuseteile 30a und 30b sind über die Schrauben 52 miteinander verbunden.

Alternativ zu der in Figur 5 dargestellten Teilung des Antriebsbaugruppengehäuses 30 ist auch eine um 90° gedrehte Teilung des Antriebsbaugruppengehäuses 30 denkbar, welche z.B. zumindest abschnittsweise entlang der Schnittlinie IV-IV verläuft.

An dem in Figur 5 oberen und unteren Ende des Abschnitts des Antriebsbaugruppengehäuses 30, welcher die Antriebseinheit 22 aufnimmt, sind die Abschlusskappen 84 und 86 zu erkennen.

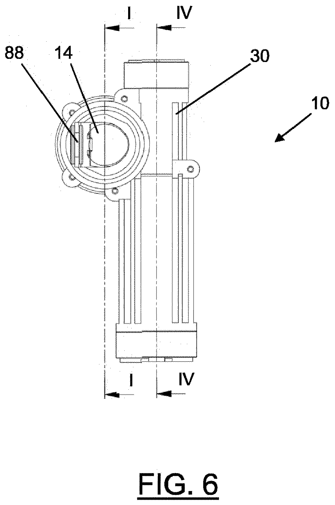

In Figur 6 ist eine Aufsicht der Spindelantriebseinrichtung 10 in einer zu der Achse der Spindel 12 parallelen Blickrichtung dargestellt. Dabei sind die Schnittebene I-I der Schnittdarstellungen gemäß Figuren 1a bis 3 und die Schnittebene IV-IV der Schnittdarstellung gemäß Figur 4 zu erkennen. Ferner ist zu sehen, dass die Spindelantriebseinrichtung 10 bzw. das Antriebsbaugruppengehäuse 30 über einen Abstützwinkel 88 derart mit derjenigen übergeordneten Baugruppe verbunden ist, welche mit der ersten Verbindungseinheit 14 verbunden ist, dass die Spindelantriebseinrichtung 10 bzw. das Antriebsbaugruppengehäuse 30 relativ zu dieser Baugruppe verdrehsicher angeordnet ist, wie dies bei derartigen Spindelantriebseinrichtungen allgemein üblich ist.

Der voranstehend erwähnte Abstützwinkel 88 kann aus einem Metall, insbesondere aus Stahl, hergestellt sein.

Vorzugsweise kann der Abstützwinkel 88 ein Durchgangsloch aufweisen, welches mit einer Aufnahme der ersten Verbindungseinheit 14, zum Beispiel zur Verbindung mit einem Bolzen der übergeordneten Baugruppe, fluchtet.

## Patentansprüche

1. Spindelantriebseinrichtung (10), umfassend
eine mit einem Außengewinde versehene Spindel (12), welche mit einer ersten Verbindungseinheit (14) zur Verbindung der Spindelantriebseinrichtung (10) mit einer übergeordneten, d.h. nicht zu der Spindelantriebseinrichtung (10) gehörenden, Baugruppe verbunden ist,
eine mit dem Außengewinde der Spindel (12) in Gewindeeingriff stehende Spindelmutter (16), welche mit einer zweiten Verbindungseinheit (18) zur Verbindung der Spindelantriebseinrichtung (10) mit einer übergeordneten, d.h. nicht zu der Spindelantriebseinrichtung (10) gehörenden, Baugruppe verbunden ist,
eine Antriebsbaugruppe (20) mit einer Antriebseinheit (22), welche dazu eingerichtet ist, die Spindel (12) oder die Spindelmutter (16) anzutreiben, einer Abtriebswelle (24) der Antriebseinheit (22) und einem Antriebsbaugruppengehäuse (30), in welchem die Antriebsbaugruppe (20) aufgenommen ist,
wenigstens ein als Kugellager ausgebildetes Lager (34, 64), welches die Spindel (12) oder die Spindelmutter (16) relativ zu dem Antriebsbaugruppengehäuse (30) rotierbar lagert, und
ein Kopplungselement (36), welches die erste Verbindungseinheit (14) mit der Spindel (12) oder die zweite Verbindungseinheit (18) mit der Spindelmutter (16) derart verbindet, dass eine Verlagerung der jeweiligen beiden Elemente voneinander weg zumindest in einer axialen Richtung der Spindel (12) verhindert wird, wobei das Kopplungselement (36) zu diesem Zweck an seinen beiden Längsenden nach innen radial umgeformte Ränder (40, 42) aufweist;
wobei ferner ein innerer Lagerring des Lagers (34) über ein Stützelement (46) an die Spindel (12) gesichert ist,
**dadurch gekennzeichnet, dass** das Antriebsbaugruppengehäuse (30) frei von Kräften ist, welche von einer der übergeordneten Baugruppen durch die Spindelantriebseinrichtung (10) auf die andere der übergeordneten Baugruppen durch Zug- und Druckkräfte übertragen werden, indem das Kopplungselement (36) mit einem äußeren Lagerring des Lagers (34) eingreift und diesen klammerartig mit einer Basis (38), auf welche die erste Verbindungseinheit (14) über ein Gewinde (44) aufgeschraubt ist, verbindet, und indem eine Zugkraft, welche zwischen den beiden übergeordneten und mit der Spindelantriebseinrichtung (10) verbundenen Baugruppen wirkt und somit über die beiden Verbindungseinheiten (14, 18) auf die Spindelantriebseinrichtung (10) einwirkt, aus der ersten Verbindungseinheit (14) über die Basis (38), das Kopplungselement (36), das Lager (34) und das Stützelement (46) in die Spindel (12) verläuft.

2. Spindelantriebseinrichtung (10) nach Anspruch 1,
**dadurch gekennzeichnet, dass** das Kopplungselement (36) die erste Verbindungseinheit (14) oder die zweite Verbindungseinheit (18) mit dem wenigstens einen Lager (34) verbindet, wobei das Lager (34) axial unverlagerbar mit der Spindel (12) oder der Spindelmutter (16) verbunden ist.

3. Spindelantriebseinrichtung (10) nach Anspruch 1 oder 2,
**dadurch gekennzeichnet, dass** das Kopplungselement (36) wenigstens einen nach innen vorstehenden Vorsprung (40, 42) aufweist, welcher dazu eingerichtet ist, in dem Kopplungselement (36) aufgenommene Komponenten axial zu sichern.

4. Spindelantriebseinrichtung (10) nach einem der vorhergehenden Ansprüche, **dadurch gekennzeichnet, dass** das Kopplungselement (36) wenigstens einen Sprengring (72) umfasst, welcher dazu eingerichtet ist, in dem Kopplungselement (36) aufgenommene Komponenten axial zu sichern.

5. Spindelantriebseinrichtung (10) nach einem der vorhergehenden Ansprüche, **dadurch gekennzeichnet, dass** die Abtriebswelle (24) der Antriebseinheit (22) zu der Spindel (12) im Wesentlichen orthogonal verläuft.

6. Spindelantriebseinrichtung (10) nach einem der vorhergehenden Ansprüche, **dadurch gekennzeichnet, dass** die erste Verbindungseinheit (14) relativ zu der Spindel (12) oder/und die zweite Verbindungseinheit (18) relativ zu der Spindelmutter (16) drehbar gehaltert ist.

7. Spindelantriebseinrichtung (10) nach einem der vorhergehenden Ansprüche, **dadurch gekennzeichnet, dass** das Antriebsbaugruppengehäuse (30) aus mehreren, insbesondere zwei, Gehäuseteilen (30a, 30b) aufgebaut ist, welche miteinander derart verbindbar sind, dass das Antriebsbaugruppengehäuse (30) die Antriebsbaugruppe (20), das Kopplungselement (36) und wenigstens einen Abschnitt der Spindel (12) umgibt.

8. Spindelantriebseinrichtung (10) nach einem der vorhergehenden Ansprüche, **dadurch gekennzeichnet, dass** die Spindel (12) ein Stützelement (46) umfasst, welches mit der Spindel (12) verbunden, insbesondere vernietet, ist, und welches das Lager (34) relativ zu der Spindel (12) axial sichert.

9. Spindelantriebseinrichtung (10) nach einem der vorhergehenden Ansprüche, **dadurch gekennzeichnet, dass** die Spindelantriebseinrichtung (10) ein mit der Spindel (12) verbundenes Antriebsrad (28) umfasst, auf welches die Antriebseinheit (22) derart einwirkt, dass eine Rotation des Antriebsrads (28) die Spindel (12) oder die Spindelmutter (16) in Rotation versetzt.

10. Spindelantriebseinrichtung (10) nach Anspruch 9,
**dadurch gekennzeichnet, dass** das Antriebsrad (28) ein Schneckenrad ist, welches mit einer mit der Abtriebswelle (24) verbundenen Schneckenwelle (26) in Gewindeeingriff steht.

11. Spindelantriebseinrichtung (10) nach Anspruch 9 oder 10,
**dadurch gekennzeichnet, dass** die Spindelantriebseinrichtung (10) ein Zwischenelement (66) umfasst, welches einerseits mit der Spindel (12) oder der Spindelmutter (16) und andererseits mit dem Antriebsrad (28) verbunden ist und welches dazu eingerichtet ist, ein Drehmoment des Antriebsrads (28) auf die Spindel (12) oder die Spindelmutter (16) zu übertragen.

12. Spindelantriebseinrichtung (10) nach Anspruch 11,
**dadurch gekennzeichnet, dass** das Zwischenelement (66) ferner dazu eingerichtet ist, an seinem Außenumfang wenigstens ein Lager (34, 64) aufzunehmen.

13. Spindelantriebseinrichtung nach Anspruch 11 oder 12,
**dadurch gekennzeichnet, dass** das Zwischenelement (66) wenigstens einen sich nach radial außen erstreckenden Vorsprung (68) aufweist, welcher dazu eingerichtet ist, ein Lager (34, 64) oder/und das Antriebsrad (28) axial zu sichern.

## Claims

1. A spindle drive apparatus (10), comprising
a spindle (12) provided with an external thread, the spindle being connected to a first connection unit (14) for connecting the spindle drive apparatus (10) to a superordinate assembly, i.e. which does not belong to the spindle drive apparatus (10),
a spindle nut (16), which is threadedly engaged with the external thread of the spindle (12) and which is connected to a second connection unit (18) for connecting the spindle drive apparatus (10) to a superordinate assembly, i.e. which does not belong to the spindle drive apparatus (10),
a drive assembly (20) with a drive unit (22), which is adapted for driving the spindle (12) or the spindle nut (16), an output shaft (24) of the drive unit (22) and a drive assembly housing (30), in which the drive assembly (20) is housed,
at least one bearing (34, 64) formed as a ball bearing, which rotatably supports the spindle (12) or the spindle nut (16) relative to the drive assembly housing (30), and
a coupling element (36), which connects the first connection unit (14) to the spindle (12) or the second connection unit (18) to the spindle nut (16) in such a way that a displacement of the respective two elements from each other is prevented in at least one axial direction of the spindle (12), wherein for this purpose the coupling element (36) has, on both of its longitudinal ends, edges (40,42) which are deformed radially towards the inside;
wherein further an inner bearing ring of the bearing (34) is secured to the spindie (12) by means of a support element (46),
**characterized in that** the drive assembly housing (30) is free from forces, which are transmitted from one of the superordinate assemblies through the spindle drive apparatus (10) to the other of the superordinate assemblies through traction and compression forces, by the coupling element (36) engaging with an external bearing ring of bearing (34) and connecting the same, clamp-like, to a base (38), on which the first connection unit (14) is screwed by means of a thread (44), and by a traction force, which acts between both superordinate assemblies connected to the spindle drive apparatus (10) and thus through both connection units (14, 18) onto the spindle drive apparatus (10), being transmitted from the first connection unit (14) through the base (38), the coupling element (36), the bearing (34) and the support element (46) to the spindle (12).

2. The spindle drive apparatus (10) of claim 1,
**characterized in that** the coupling element (36) connects the first connection unit (14) or the second connection unit (18) to the at least one bearing (34), wherein the bearing (34) is connected, in an axially undisplaceable way, to the spindle (12) or the spindle nut (16).

3. The spindle drive apparatus (10) of claim 1 or 2,
**characterized in that** the coupling element (36) has at least one inwardly protruding protrusion (40, 42), which is adapted for axially securing components housed within the coupling element (36).

4. The spindle drive apparatus (10) of any of the preceding claims,
**characterized in that** the coupling element (36) comprises at least one spring ring (72), which is adapted for axially securing components housed within the coupling element (36).

5. The spindle drive apparatus (10) of any of the preceding claims,
**characterized in that** the output shaft (24) of the drive unit (22) is essentially perpendicular to the spindle (12).

6. The spindle drive apparatus (10) of any of the preceding claims,
**characterized in that** the first connection unit (14) is rotatably supported relative to the spindle (12) or/and the second connection unit (18) is rotatably supported relative to the spindle nut (16).

7. The spindle drive apparatus (10) of any of the preceding claims,
**characterized in that** the drive assembly housing (30) is composed of a plurality, in particular two, housing parts (30a, 30b), which may be connected to each other, such that the drive assembly housing (30) surrounds the drive assembly (20), the coupling element (36) and at least a portion of the spindle (12).

8. The spindle drive apparatus (10) of any of the preceding claims,
**characterized in that** the spindle (12) comprises a support element (46), which is connected to the spindle (12), in particular by riveting, and which axially secures the bearing (34) with respect to the spindle (12).

9. The spindle drive apparatus (10) of any of the preceding claims,
**characterized in that** the spindle drive apparatus (10) comprises a drive gear (28), which is connected to the spindle (12), on which the drive unit (22) acts in such a way that a rotation of the drive gear (28) rotates the spindle (12) or the spindle nut (16).

10. The spindle drive apparatus (10) of claim 9,
**characterized in that** the drive gear (28) is a worm gear, which is threadedly engaged with a worm shaft (26) which is connected to the output shaft (24).

11. The spindle drive apparatus (10) of claim 9 or 10,
**characterized in that** the spindle drive apparatus (10) comprises an intermediate element (66), which is connected, on one side, to the spindle (12) or the spindle nut (16) and on the other side to the drive gear (28) and which is adapted for transmitting a torque of the drive gear (28) to the spindle (12) or to the spindle nut (16).

12. The spindle drive apparatus (10) of claim 11,
**characterized in that** the intermediate element (66) is also adapted for housing at least one bearing (34, 64) on its external circumference.

13. The spindle drive apparatus (10) of claim 11 or 12,
**characterized in that** the intermediate element (66) has at least one radially outwardly protruding protrusion (68), which is adapted for axially securing a bearing (34, 64) or/and the drive gear (28).

## Revendications

1. Dispositif d'entraînement à broche (10), comprenant
une broche (12) pourvue d'un filetage extérieur, qui est reliée à une première unité de liaison (14) pour relier le dispositif d'entraînement à broche (10) à un ensemble supérieur, c'est-à-dire n'appartenant pas au dispositif d'entraînement à broche (10), un écrou de broche (16) en prise par filetage avec le filetage extérieur de la broche (12), qui est relié à une deuxième unité de liaison (18) pour relier le dispositif d'entraînement à broche (10) à un sous-ensemble supérieur, c'est-à-dire n'appartenant pas au dispositif d'entraînement à broche (10),
un ensemble d'entraînement (20) avec une unité d'entraînement (22), qui est adaptée pour entraîner la broche (12) ou l'écrou de broche (16), un arbre de sortie (24) de l'unité d'entraînement (22) et un boîtier d'ensemble d'entraînement (30), dans lequel est logé l'ensemble d'entraînement (20),
au moins un palier (34, 64) adapté comme un roulement à billes, qui supporte la broche (12) ou l'écrou de broche (16) de manière rotative par rapport au boîtier de l'ensemble d'entraînement (30), et
un élément d'accouplement (36) qui relie la première unité de liaison (14) à la broche (12) ou la deuxième unité de liaison (18) à l'écrou de broche (16) de telle sorte qu'un déplacement des deux éléments respectifs à l'écart l'un de l'autre est empêché au moins dans une direction axiale de la broche (12), dans lequel l'élément d'accouplement (36) présente à cet effet des bords (40, 42) déformés radialement vers l'intérieur à ses deux extrémités longitudinales ;
dans lequel, en outre, une bague de palier intérieure du palier (34) est fixée à la broche (12) par un élément de support (46),
**caractérisé en ce que** le boîtier d'ensemble d'entraînement (30) est exempt de forces qui sont transmises de l'un des ensembles supérieurs à l'autre des ensembles supérieurs par le dispositif d'entraînement à broche (10) par des forces de traction et de compression,
**en ce que** l'élément d'accouplement (36) engage un anneau de palier extérieure du palier (34) et relie celui-ci en forme d'une agrafe à une base (38) sur laquelle la première unité de liaison (14) est vissée par un filetage (44), et
**en ce qu'**une force de traction, qui agit entre les deux ensembles supérieurs et reliés au dispositif d'entraînement à broche (10) et qui agit ainsi sur le dispositif d'entraînement à broche (10) par l'intermédiaire des deux unités de liaison (14, 18), passe de la première unité de liaison (14) dans la broche (12) par l'intermédiaire de la base (38), de l'élément d'accouplement (36), du palier (34) et de l'élément de support (46).

2. Dispositif d'entraînement à broche (10) selon la revendication 1,
**caractérisé en ce que** l'élément d'accouplement (36) relie la première unité de liaison (14) ou la deuxième unité de liaison (18) audit au moins un palier (34), dans lequel le palier (34) est relié à la broche (12) ou à l'écrou de broche (16) de manière à ne pas pouvoir se déplacer axialement.

3. Dispositif d'entraînement à broche (10) selon la revendication 1 ou 2,
**caractérisé en ce que** l'élément d'accouplement (36) présente au moins une saillie (40, 42) faisant saillie vers l'intérieur, qui est adaptée pour fixer axialement des composants logés dans l'élément d'accouplement (36).

4. Dispositif d'entraînement à broche (10) selon l'une des revendications précédentes, **caractérisé en ce que** l'élément d'accouplement (36) comprend au moins un jonc d'arrêt (72) adapté pour fixer axialement les composants reçus dans l'élément d'accouplement (36).

5. Dispositif d'entraînement à broche (10) selon l'une des revendications précédentes, **caractérisé en ce que** l'arbre de sortie (24) de l'unité d'entraînement (22) est sensiblement orthogonal à la broche (12).

6. Dispositif d'entraînement à broche (10) selon l'une des revendications précédentes, **caractérisé en ce que** la première unité de liaison (14) est maintenue de manière rotative par rapport à la broche (12) ou/et la deuxième unité de liaison (18) par rapport à l'écrou de broche (16).

7. Dispositif d'entraînement à broche (10) selon l'une des revendications précédentes, **caractérisé en ce que** le boîtier de l'ensemble d'entraînement (30) est constitué de plusieurs, en particulier de deux, parties de boîtier (30a, 30b) qui peuvent être reliées entre elles de telle sorte que le boîtier de l'ensemble d'entraînement (30) entoure l'ensemble d'entraînement (20), l'élément d'accouplement (36) et au moins une partie de la broche (12).

8. Dispositif d'entraînement à broche (10) selon l'une des revendications précédentes, **caractérisé en ce que** la broche (12) comprend un élément de support (46) qui est relié, en particulier riveté, à la broche (12) et qui bloque le palier (34) axialement par rapport à la broche (12).

9. Dispositif d'entraînement à broche (10) selon l'une des revendications précédentes, **caractérisé en ce que** le dispositif d'entraînement à broche (10) comprend une roue d'entraînement (28) reliée à la broche (12), sur laquelle l'unité d'entraînement (22) agit de telle sorte qu'une rotation de la roue d'entraînement (28) entraîne la broche (12) ou l'écrou de broche (16) en rotation.

10. Dispositif d'entraînement à broche (10) selon la revendication 9,
**caractérisé en ce que** la roue d'entraînement (28) est une roue à vis sans fin qui est en prise par filetage avec un arbre à vis sans fin (26) relié à l'arbre de sortie (24).

11. Dispositif d'entraînement à broche (10) selon la revendication 9 ou 10,
**caractérisé en ce que** le dispositif d'entraînement à broche (10) comprend un élément intermédiaire (66) qui est relié d'une part à la broche (12) ou à l'écrou de broche (16) et d'autre part à la roue d'entraînement (28) et qui est adapté pour transmettre un couple de la roue d'entraînement (28) à la broche (12) ou à l'écrou de broche (16).

12. Dispositif d'entraînement à broche (10) selon la revendication 11,
**caractérisé en ce que** l'élément intermédiaire (66) est en outre adapté pour recevoir au moins un palier (34, 64) sur sa périphérie extérieure.

13. Dispositif d'entraînement à broche selon la revendication 11 ou 12,
**caractérisé en ce que** l'élément intermédiaire (66) présente au moins une saillie (68) s'étendant radialement vers l'extérieur, qui est adaptée pour sécuriser axialement un palier (34, 64) ou/et la roue d'entraînement (28).
